# EUROPÄISCHE PATENTSCHRIFT

(11) **EP 1 613 851 B1**
(45) Veröffentlichungstag und Bekanntmachung des Hinweises auf die Patenterteilung: **23.05.2007**
(21) Anmeldenummer: 04713551.2
(22) Anmeldetag: 23.02.2004
(51) Int. Cl.: F02D 41/20

(54) **VERFAHREN ZUR ERMITTLUNG DER INDIVIDUELLEN ANSTEUERSPANNUNG EINES PIEZOELEKTRISCHEN ELEMENTS**
METHOD FOR DETERMINING THE INDIVIDUAL CONTROL VOLTAGE OF A PIEZOELECTRIC ELEMENT
PROCEDE POUR DETERMINER LA TENSION D'AMORCAGE INDIVIDUELLE D'UN ELEMENT PIEZO-ELECTRIQUE

(30) Priorität: 07.04.2003 DE 10315815
(43) Veröffentlichungstag der Anmeldung: 11.01.2006
(73) Patentinhaber: ROBERT BOSCH GMBH, 70442 Stuttgart (DE)
(72) Erfinder: SUTTER, Kai, 70372 Stuttgart (DE); RAU, Andreas, 70499 Stuttgart (DE)
(86) Internationale Anmeldenummer: PCT/EP2004/050187
(87) Internationale Veröffentlichungsnummer: WO 2004/090314

(56) Entgegenhaltungen:
- EP-A- 1 138 909
- DE-A- 19 930 309
- US-A- 6 133 714
- US-A1- 2002 041 475

## Beschreibung

### Stand der Technik

Die Erfindung betrifft ein Verfahren zur Ermittlung der individuellen Ansteuerspannung eines piezoelektrischen Elements.

Derartige piezoelektrische Elemente, werden beispielsweise als Piezo-Injektoren in Einspritzsystemen für Kraftfahrzeuge verwendet. Sie werden auf eine bestimmte Spannung geladen, welche proportional einem Hub des piezoelektrischen Elements ist. Durch diesen Hub wird, übersetzt mittels eines hydraulischen Kopplers, ein Einspritzventil betätigt. Um die volle Funktionalität eines derartigen Piezo-Injektors zu gewährleisten, muss die Ansteuerspannung für jeden Betriebspunkt, zum Beispiel im Falle eines Einspritzsystems für ein Kraftfahrzeug für jeden Druck im Common-Rail-System, für jede Temperatur und dergleichen, so gewählt werden, dass das Schaltventil öffnet und über die Dauer des Einspritzzyklus in Offenstellung verbleibt.

Aus der EP-A-1 138 909 ist ein Verfahren und eine Vorrichtung zur Ansteuerung eines Piezoaktors bekannt. Zur Ermittlung der Ansteuerspannung wird der Spannungsabfall an dem Piezoaktor nach einem Ladevorgang erfasst. Hierbei wird die Spannungsdifferenz zwischen einem Zeitpunkt t1 und einem Zeitpunkt t2 ermittelt. Bei dem Zeitpunkt t1 handelt es sich um den Zeitpunkt, bei dem der Ladevorgang endet. Bei dem Zeitpunkt t2 handelt es sich um den Zeitpunkt, bei dem der Aktor seine Endlage erreicht hat. Die Ermittlung des Zeitpunktes t2 ist problematisch. Dies liegt unter Anderem daran, dass dieser Zeitpunkt ebenfalls durch die Toleranzen und Alterungserscheinungen beeinflusst wird und sich im Laufe des Betriebes ändert.

Die Ansteuerspannung, die bei jedem piezoelektrischen Element individuell ist (individuelle Ansteuerspannung) wird beispielsweise bei dem aus der DE 100 32 022 A1 bekannten Verfahren dadurch bestimmt, dass vor einem Einspritzvorgang indirekt der Druck in dem hydraulischen Koppler gemessen wird. Durch den von dem hydraulischen Koppler in dem Piezo-Aktor induzierten Druck wird auf eine entsprechende Piezo-Spannung im Aktor geschlossen.

Es sind darüber hinaus auch Verfahren bekannt, bei denen die Spannung in bestimmten Bereichen variiert wird und gleichzeitig die Einspritzmenge erfasst wird. Aus der erfassten

Einspritzmenge wird auf die Funktionsfähigkeit des piezoelektrischen Elements geschlossen.

Ein Verfahren und eine Schaltung zur zeitabhängigen Messung der Spannung entlang eines piezoelektrischen Elements geht beispielsweise aus der EP 1 138 902 A1 hervor.

Bei der Herstellung von Piezo-Elementen, die in Common-Rail-Dieseleinspritzsystemen verwendet werden, ist es erforderlich, dass bei der Herstellung derartiger Piezo-Common-Rail-Injektoren sehr enge Toleranzen eingehalten werden, um möglichst große Ausbringungen in der Serie zu erzielen. Von großer Bedeutung ist hierbei das Zusammenspiel des Piezo-Aktors und der Hydraulik, beispielsweise in Form des hydraulischen Kopplers. Da in derartigen Injektoren aus Kostengründen keine Sensoren eingesetzt werden können, sind nur wenig Informationen über das dynamische Verhalten von Piezo-Injektoren verfügbar.

Aufgrund der Alterung entstehende Änderungen der Piezo-Aktoren, beispielsweise eine Alterung der Piezo-Keramik oder das Einschlagen von Ventilsitzen können bislang nur durch vorab definierte Kennfelder, die beispielsweise in einem Steuergerät einer Brennkraftmaschine abgelegt sind, zumindest teilweise kompensiert werden.

Aufgabe der Erfindung ist es, die individuelle Ansteuerspannung von Piezo-Elementen, insbesondere Piezo-Injektoren, die insbesondere in Diesel-Common-Rail-Einspritzsystemen verwendet werden auf technisch möglichst einfache und kostengünstige Weise zu ermitteln. Dabei soll auch die Dynamik einer sich über die Lebensdauer des Piezo-Injektors verändernden individuellen Ansteuerspannung berücksichtigt werden.

### Vorteile der Erfindung

Diese Aufgabe wird durch ein Verfahren zur Bestimmung der individuellen Ansteuerspannung eines piezoelektrischen Elements mit den Merkmalen des Anspruchs 1 gelöst.

Grundidee der Erfindung ist es, den Piezo-Aktor und damit die Piezo-Keramik selbst als Sensor zu verwenden, wodurch zusätzliche Sensoren überflüssig werden. Es wird vielmehr der Spannungsabfall an dem piezoelektrischen Element nach einem Ladevorgang erfasst und aus diesem Spannungsabfall selbst auf die individuelle Ansteuerspannung des piezoelektrischen Elements geschlossen. Dabei die an dem piezoelektrischen Element anliegende Spannung unmittelbar nach einem Ladevorgang und die an dem piezoelektrischen Element anliegende Spannung unmittelbar vor einem dem Ladevorgang folgenden Entladevorgang erfasst und voneinander subtrahiert und aus dieser Differenz auf die individuelle Ansteuerspannung des piezoelektrischen Elements geschlossen. Hierdurch kann eine aufwendige und kostenintensive Ermittlung der individuellen Ansteuerspannung beispielsweise durch eine Variation der Ansteuerspannung entfallen.

Die individuelle Ansteuerspannung wird dabei Vorteilhafterweise einer Kennlinie entnommen, die den Zusammenhang zwischen der Differenz und der individuellen Ansteuerspannung repräsentiert.

Diese Kennlinie wird vorzugsweise experimentell aufgrund einer großen Zahl von Messungen an unterschiedlichen piezoelektrischen Elementen ermittelt und beispielsweise in einem Steuergerät eines Kraftfahrzeugs gespeichert.

Eine andere sehr vorteilhafte Ausgestaltung des Verfahrens sieht vor, dass die an dem piezoelektrischen Element während des Ladevorgangs anliegende Spannung iterativ solange erhöht wird, bis die an dem piezoelektrischen Element unmittelbar nach dem Ladevorgang anliegende nicht von der an dem piezoelektrischen Element unmittelbar vor dem darauffolgenden Entladevorgang anliegende Spannung abweicht und daß die so ermittelte Spannung als individueller Spannungsbedarf gewertet wird.

Eine weitere vorteilhafte Ausgestaltung des Verfahrens sieht vor, daß das piezoelektrische Element mit nur einer Spannung beaufschlagt wird und dabei die Ladezeit iterativ solange erhöht wird, bis die an dem piezoelektrischen Element unmittelbar nach dem Ladevorgang anliegende Spannung nicht von der an dem piezoelektrischen Element unmittelbar vor dem Entladevorgang anliegenden Spannung abweicht und daß die so ermittelte Spannung als individuelle Ansteuerspannung gewertet wird. Vorzugsweise erfolgt die iterative Erhöhung der Spannung, mit der das piezoelektrische Element beaufschlagt wird, und die Erfassung der an dem piezoelektrischen Element unmittelbar vor dem Entladevorgang anliegenden Spannung bei niedrigen Drücken des einzuspritzende Fluids. Der Spannungsverlauf wird dabei vorzugsweise kontinuierlich an dem piezoelektrischen Element erfaßt.

### Zeichnung

Weitere Vorteile und Merkmale der Erfindung sind Gegenstand der nachfolgenden Beschreibung sowie der zeichnerischen Darstellung von Ausführungsbeispielen der Erfindung.

In der Zeichnung zeigen:
- Fig. 1: den schematischen Aufbau eines aus dem Stand der Technik bekannten Einspritzventils;
- Fig. 2: schematisch die Spannung über der Ansteuerzeit beim Laden und Entladen eines piezoelektrischen Elements gemäß vorliegender Erfindung;
- Fig. 3: den Zusammenhang zwischen der Spannungsänderung und der individuellen Ansteuerspannung eines piezoelektrischen Elements und
- Fig. 4: schematisch zeitliche Spannungsverläufe zur Erläuterung der Erfassung der individuellen Ansteuerspannung eines piezoelektrischen Elements gemäß einem weiteren Ausführungsbeispiel der Erfindung.

### Beschreibung bevorzugter Ausführungsbeispiele

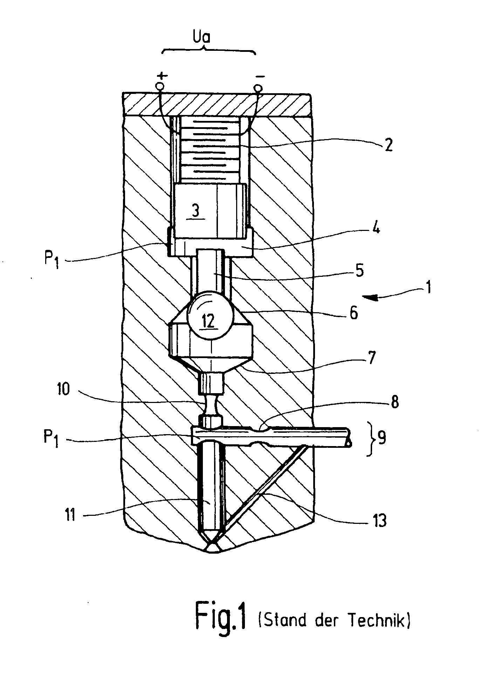

Fig. 1 zeigt in schematischer Darstellung ein aus dem Stand der Technik bekanntes Einspritzventil 1 mit einer zentralen Bohrung. Im oberen Teil ist ein Stellkolben 3 mit einem piezoelektrischen Aktor 2 in die zentrale Bohrung eingebracht, wobei der Stellkolben 3 mit dem Aktor 2 fest verbunden ist. Der Stellkolben 3 schließt nach obenhin einen hydraulischen Koppler 4 ab, während nach unten eine Öffnung mit einem Verbindungskanal zu einem ersten Sitz 6 vorgesehen ist, in dem ein Kolben 5 mit einem Ventilschließglied 12 angeordnet ist. Das Ventilschließglied 12 ist als doppelt schließendes Steuerventil ausgebildet. Es verschließt den ersten Sitz 6, wenn der Aktor 2 in Ruhephase ist. Bei Betätigung des Aktors 2, das heißt beim Anlegen einer Ansteuerspannung Ua an den Klemmen +, -, betätigt der Aktor 2 den Stellkolben 3 und drückt über den hydraulischen Koppler 4 den Kolben 5 mit dem Verschließglied 12 in Richtung auf einen zweiten Sitz 7. Unterhalb des zweiten Sitzes ist in einem entsprechenden Kanal eine Düsennadel 11 angeordnet, die den Auslauf in einem Hochdruckkanal (Common-Rail-Druck) 13 schließt oder öffnet, je nachdem, welche Ansteuerspannung Uₐ anliegt. Der Hochdruck wird durch das einzuspritzende Medium, beispielsweise Kraftstoff für einen Verbrennungsmotor, über einen Zulauf 9 zugeführt, über eine Zulaufdrossel 8 und eine Ablaufdrossel 10 wird die Zuflußmenge des Mediums in Richtung auf die Düsennadel 11 und den hydraulischen Koppler 4 gesteuert. Der hydraulische Koppler 4 hat dabei die Aufgabe, einerseits den Hub des Kolbens 5 zu verstärken und andererseits das Steuerventil von der statischen Temperaturdehnung des Aktors 2 zu entkoppeln. Die Wiederbefüllung des Kopplers 4 ist hier nicht dargestellt.

Nachfolgend wird die Funktionsweise dieses Einspritzventils näher erläutert. Bei jeder Ansteuerung des Aktors 2 wird der Stellkolben 3 in Richtung des hydraulischen Kopplers 4 bewegt. Dabei bewegt sich auch der Kolben 5 mit dem Verschließglied 12 in Richtung auf den zweiten Sitz 7 zu. Über Leckspalte wird dabei ein Teil des im hydraulischen Kopplers 4 befindlichen Mediums, beispielsweise der Kraftstoff, herausgedrückt. Zwischen zwei Einspritzungen muß daher der hydraulische Koppler 4 wiederbefüllt werden, um seine Funktionssicherheit zu erhalten.

Über den Zulaufkanal 9 herrscht ein hoher Druck, der beim Common-Rail-System beispielsweise zwischen 200 und 2000 bar betragen kann. Dieser Druck wirkt gegen die Düsennadel 11 und hält sie geschlossen, so daß kein Kraftstoff austreten kann. Wird nun infolge der Ansteuerspannung Uₐ der Aktor 2 betätigt und damit das Verschlußglied 12 in Richtung des zweiten Sitzes bewegt, baut sich der Druck im Hochdruckbereich ab und die Düsennadel 11 gibt den Einspritzkanal frei. Mit P₁ ist der sogenannte Kopplerdruck bezeichnet, wie er im hydraulischen Koppler 4 gemessen wird. Im Koppler 4 stellt sich ohne Ansteuerung Uₐ ein stationärer Druck P₁ ein, der beispielsweise 1/10 des Drucks im Hochdruckteil ist. Nach dem Entladen des Aktors 2 ist der Kopplerdruck P₁ näherungsweise 0 und wird durch Wiederbefüllung wieder angehoben.

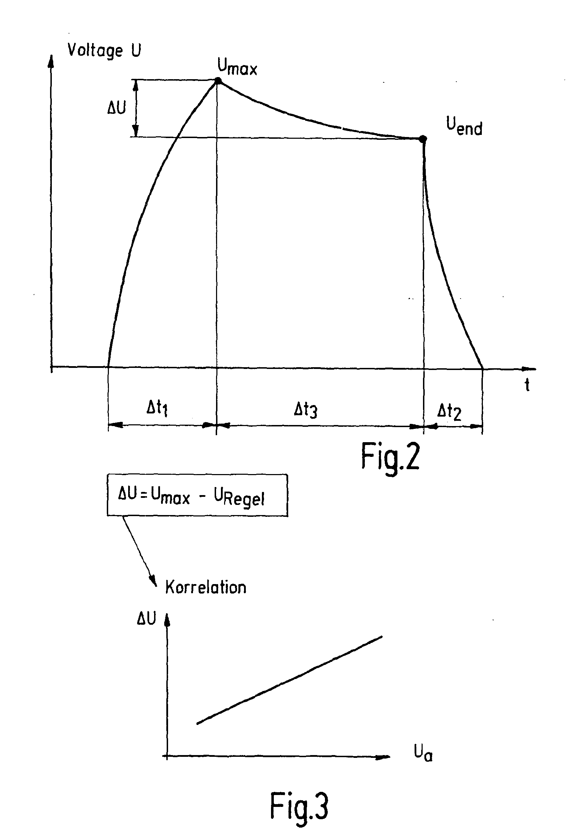

Eine Längenänderung des piezoelektrischen Aktors 2 wird dadurch erreicht, daß der piezoelektrische Aktor 2 in einem ersten Zeitintervall Δ t₁ mit einem Strom beaufschlagt wird. Das erste Zeitintervall Δ t₁ ist der Ladevorgang des piezoelektrischen Aktors 2. In diesem Intervall wird der piezoelektrische Aktor 2 auf eine maximale Spannung Uₘₐₓ aufgeladen. In einem weiteren Zeitintervall Δ t₂ (siehe Fig. 2) findet der Entladevorgang des piezoelektrischen Aktors statt. In einem dritten Zeitintervall Δ t₃, das zwischen diesen beiden Intervallen liegt, wirkt der piezoelektrische Aktor 2 wie ein Sensor, bei dem jegliche Längen-/Kraftänderungen zu Spannungsänderungen führen. Der zeitliche Verlauf der Spannung im Intervall Δ t₃ hängt nun davon ab, mit welcher Spannung der piezoelektrische Aktor 2 unmittelbar nach dem Ladevorgang, das heißt am Ende des Intervalls Δ t₁ beaufschlagt wird. Es wurde in umfangreichen Meßreihen festgestellt, daß die Spannung kontinuierlich abnimmt, bis sie sich einer Spannung unmittelbar vor dem Entladevorgang, in Fig. 2 als U_{Regel} bezeichnet, asymptotisch nähert.

Bei einer vorteilhaften Ausführungsform wird nun die Spannungsdifferenz ΔU zwischen der Maximalspannung Uₘₐₓ und der Spannung unmittelbar vor dem Entladevorgang U_{Regel} erfaßt. Diese Spannungsdifferenz resultiert daraus, daß der Stellkolben 3 nach dem Abschalten des Ladestroms noch einen Weg zurücklegt, da sich der piezoelektrische Aktor 2 weiter ausdehnt. Ist diese Spannungsdifferenz ΔU beispielsweise groß, so muß das Schaltventil nach Abschalten des Ladestroms noch einen weiten Weg zurücklegen, wodurch die Spannung im sensorischen Bereich des piezoelektrischen Aktors 2 stärker sinkt, da sich der Aktor 2 weiter dehnt, als es bei einem Injektor der Fall ist, bei dem das Schließglied 12 sich durch den Stellkolben 3 sich schon sehr nahe an dem zweiten Sitz 7 befindet. In diesem Falle ist ΔU klein.

Es hat sich in Meßreihen gezeigt, daß die Spannungsdifferenz ΔU mit dem individuellen Spannungsbedarf des Injektors korreliert. Derartige piezoelektrische Aktoren 2 benötigen deshalb eine individuelle Ansteuerspannung Uₐ, weil der Sitzdurchmesser, der Aktorhub, die Reibung etc. Streuungen unterworfen sind, welche sich auf den Spannungsbedarf auswirken. Ist die Spannungsdifferenz AU groß, ist der Spannungsbedarf des piezoelektrischen Aktors größer als bei einer kleinen Spannungsdifferenz. Entsprechend verhält sich ein solches Einspritzventil bei Temperaturänderungen. Steigt die Temperatur, so erhöht sich der Spannungsbedarf und entsprechend erhöht sich die Spannungsdifferenz. Die individuelle Ansteuerspannung Uₐ wird nun dadurch ermittelt, daß die Spannungsdifferenz gemessen wird und hieraus beispielsweise aufgrund einer Kennlinie, wie in Fig. 3 dargestellt, die individuelle Ansteuerspannung Uₐ bestimmt wird. Hierdurch ist es mittels einer einzigen Messung, zum Beispiel während des Spülprozesses in der Serienfertigung der Einspritzventile 1 möglich, den individuellen Spannungsbedarf des Injektors zu bestimmen.

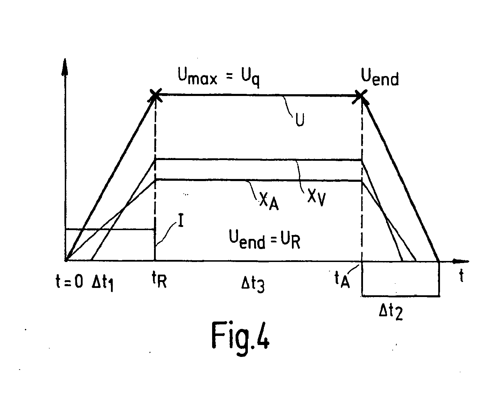

Ein weiteres Ausführungsbeispiel der Erfindung wird in Verbindung mit Fig. 4 nachfolgend näher erläutert.

Bei dem in Fig. 2 dargestellten Beispiel ist - wie vorstehend erwähnt - am Ende des Ladevorgangs die Ventilkugel 12 noch nicht am zweiten Sitz 7 angelangt. Die Ventilkugel 12 bewegt sich vielmehr weiter, der piezoelektrische Aktor 2 dehnt sich bei konstanter Ladung weiter aus, wodurch die Spannung wie schematisch in Fig. 2 dargestellt absinkt.

Eine weitere Ausgestaltung des Verfahrens sieht nun vor, die Spannung Uₘₐₓ kontinuierlich solange weiter zu erhöhen, bis sie sich am Ende des Entladevorgangs nicht mehr ändert. Die Spannung wird dabei idealerweise bei niedrigen Drücken in kleinen Schrittweiten erhöht. Hierdurch wird die Einspritzmenge nur sehr wenig beeinflußt, so daß der Betrieb des Einspritzventils 1 nicht gestört wird. Sobald die an dem piezoelektrischen Element anliegende Spannung Uₘₐₓ einen Wert angenommen hat, der dem individuellen Spannungsbedarf entspricht, ändert sich die Spannung im Intervall Δ t₃ nicht mehr, so daß der Spannungsverlauf die in Fig. 4 schematisch dargestellte Trapezform annimmt. In diesem Falle entspricht die nach dem Ladevorgang an dem piezoelektrischen Aktor 2 anliegende Spannung Uₘₐₓ dem individuellen Spannungsbedarf, der beispielsweise in einem Steuergerät gespeichert werden kann. Eine weitere Erhöhung der an dem piezoelektrischen Aktor 2 nach dem Entladevorgang anliegende Spannung Uₘₐₓ würde nun an dem Spannungsverlauf nichts mehr ändern. Aus dem Spannungsbedarf kann nun beispielsweise über eine Kennlinie die individuelle Ansteuerspannung ermittelt werden, die zum Beispiel aus energetischen Gründen definiert verkleinert wird.

Bei einem weiteren Ausführungsbeispiel wird die an die piezoelektrischen Aktor anliegende Spannung Uₘₐₓ konstant gehalten und die Ladezeit, das heißt die Größe des Intervalls Δ t₁ variiert, das heißt insbesondere schrittweise erhöht, um den charakteristischen Punkt der Spannung, das heißt die Spannung zu ermitteln, bei der die nach dem Ladevorgang an den piezolektrischen Aktor 2 anliegende Spannung sich im Interval Δ t₃ praktisch nicht mehr ändert, zu ermitteln.

Vorteilhaft bei sämtlichen vorbeschriebenen Ausgestaltungen des erfindungsgemäßen Verfahrens ist es, daß die individuelle Ansteuerspannung Uₐ ohne zusätzliche Sensoren ermittelt werden kann und darüber hinaus auch Aussagen über das dynnamische Verhalten des Einspritzventils 1 während dessen Betriebs erlaubt, denn wenn beispielsweise das Einspritzventil im charakteristischen Punkt betrieben wird, das heißt dann, wenn sich die an dem piezoelektrischen Aktor 2 nach dem Entladevorgang anliegende Spannung Uₘₐₓ nicht mehr ändert, ist sichergestellt, daß die Ventilkugel 12 den zweiten Sitz 7 erreicht hat.

## Patentansprüche

1. Verfahren zur Ermittlung der Ansteuerspannung eines piezoelektrischen Elements, **dadurch gekennzeichnet, dass** der Spannungsabfall an die piezoelektrischen Elemente nach einem Ladevorgang erfasst wird wobei die an dem piezoelektrischen Element anliegende Spannung unmittelbar nach dem Ladevorgang und die an dem piezoelektrischen Element anliegende Spannung unmittelbar vor einem darauf folgenden Entladevorgang erfasst und voneinander subtrahiert werden und dass aus dieser Differenz auf die individuelle Ansteuerspannung des piezoelektrischen Elements geschlossen wird.

2. Verfahren nach Anspruch 1, **dadurch gekennzeichnet, dass** die individuelle Ansteuerspannung aus einer Kennlinie entnommen wird, die den Zusammenhang zwischen der Differenz und der individuellen Ansteuerspannung repräsentiert.

3. Verfahren nach Anspruch 2, **dadurch gekennzeichnet, dass** die Kennlinie experimentell aufgrund einer großen Zahl von Messungen an unterschiedlichen Aktoren ermittelt wird.

4. Verfahren nach Anspruch 1, **dadurch gekennzeichnet, dass** die an dem piezoelektrischen Element während des Ladevorgangs anliegende Spannung iterativ solange erhöht wird, bis die an dem piezoelektrischen Element unmittelbar nach dem Ladevorgang anliegende Spannung nicht von einer an dem piezoelektrischen Element unmittelbar vor einem darauf folgenden Entladevorgang anliegende Spannung abweicht, und dass die so ermittelte Spannung als individueller Spannungsbedarf gewertet wird, woraus auf die individuelle Ansteuerspannung des piezoelektrischen Elements geschlossen wird.

5. Verfahren nach Anspruch 4, **dadurch gekennzeichnet, dass** die iterative Erhöhung der Spannung, mit der das piezoelektrische Element beaufschlagt wird und die Erfassung der an dem piezoelektrischen Element abgreifbaren Spannung bei niedrigen Drücken des einzuspritzenden Fluids vorgenommen werden.

6. Verfahren nach Anspruch 4 oder 5, **dadurch gekennzeichnet, dass** der Spannungsverlauf an dem piezoelektrischen Element kontinuierlich erfasst wird.

7. Verfahren nach einem der Ansprüche 4 bis 6, **dadurch gekennzeichnet, dass** anstelle der iterativen Erhöhung der Spannung, mit der das piezoelektrische Element beaufschlagt wird, das piezoelektrische Element mit nur einer Spannung beaufschlagt wird und dabei die Ladezeit iterativ so lange erhöht wird, bis die an dem piezoelektrischen Element unmittelbar nach dem Ladevorgang anliegende Spannung nicht von der an dem piezoelektrischen Element unmittelbar vor einem darauf folgenden Entladevorgang anliegenden Spannung abweicht.

## Claims

1. Method for determining the control voltage of a piezoelectric element, **characterized in that** the voltage drop across the piezoelectric elements is sensed after a charging process, the voltage which is present at the piezoelectric element being sensed directly after the charging operation and the voltage which is present at the piezoelectric element being sensed directly before a subsequent discharging process and these voltages being subtracted from one another, and **in that** the individual control voltage of the piezoelectric element is concluded from this difference.

2. Method according to Claim 1, **characterized in that** the individual control voltage is obtained from a characteristic curve which represents the relationship between the difference and the individual control voltage.

3. Method according to Claim 2, **characterized in that** the characteristic curve is determined experimentally on the basis of a large number of measurements at different actuators.

4. Method according to Claim 1, **characterized in that** the voltage which is present at the piezoelectric element during the charging process is increased iteratively until the voltage which is present at the piezoelectric element directly after the charging process does not deviate from a voltage which is present at the piezoelectric element directly before a subsequent discharging process, and **in that** the voltage which is determined in this way is evaluated as an individual voltage requirement from which the individual control voltage of the piezoelectric element is concluded.

5. Method according to Claim 4, **characterized in that** the iterative increasing of the voltage which is applied to the piezoelectric element and the sensing of the voltage which can be tapped at the piezoelectric element are performed at low pressures of the fluid to be injected.

6. Method according to Claim 4 or 5, **characterized in that** the voltage profile at the piezoelectric element is sensed continuously.

7. Method according to one of Claims 4 to 6, **characterized in that** instead of the iterative increasing of the voltage which is applied to the piezoelectric element, just one voltage is applied to the piezoelectric element and in the process the charge time is increased iteratively until the voltage which is present at the piezoelectric element directly after the charging process does not deviate from the voltage which is present at the piezoelectric element directly before a subsequent discharging process.

## Revendications

1. Procédé de détermination de la tension de commande d'un élément piézoélectrique,
**caractérisé en ce qu'**
on saisit la chute de tension au niveau des éléments piézoélectriques après un processus de charge, en mesurant la tension appliquée au niveau de l'élément piézoélectrique immédiatement après le processus de charge et la tension appliquée au niveau de l'élément piézoélectrique immédiatement avant un processus de décharge suivant, et en faisant la différence entre ces deux tensions, et
à partir de cette différence, on déduit la tension de commande individuelle de l'élément piézoélectrique.

2. Procédé selon la revendication 1,
**caractérisé en ce que**
la tension de commande individuelle est déduite d'une courbe caractéristique, qui représente le rapport entre la différence et la tension de commande individuelle.

3. Procédé selon la revendication 2,
**caractérisé en ce que**
la courbe caractéristique est déterminée expérimentalement sur la base d'un grand nombre de mesures effectuées au niveau de différents actionneurs.

4. Procédé selon la revendication 1,
**caractérisé en ce qu'**
on augmente de manière itérative la tension appliquée au niveau de l'élément piézoélectrique pendant le processus de charge jusqu'à ce que la tension appliquée au niveau de l'élément piézoélectrique immédiatement après le processus de charge soit égale à une tension appliquée au niveau de l'élément piézoélectrique immédiatement avant un processus de décharge suivant, et
on exploite la tension ainsi déterminée en tant que besoin en tension individuel, ce qui permet de déduire la tension de commande individuelle de l'élément piézoélectrique.

5. Procédé selon la revendication 4,
**caractérisé en ce que**
l'augmentation itérative de la tension sollicitant l'élément piézoélectrique, ainsi que l'enregistrement de la tension appliquée au niveau de l'élément piézoélectrique, sont effectués à des pressions faibles du fluide à injecter.

6. Procédé selon la revendication 4 ou 5,
**caractérisé en ce que**
le tracé de la tension au niveau de l'élément piézoélectrique est saisi en continu.

7. Procédé selon l'une des revendications 4 à 6,
**caractérisé en ce qu'**
à la place de l'augmentation itérative de la tension sollicitant l'élément piézoélectrique, l'élément piézoélectrique est sollicité avec une seule tension et le temps de charge est augmenté de manière itérative jusqu'à ce que la tension appliquée au niveau de l'élément piézoélectrique immédiatement après le processus de charge soit égale à la tension appliquée au niveau de l'élément piézoélectrique immédiatement avant un processus de décharge suivant.
